# EUROPÄISCHE PATENTSCHRIFT

(11) **EP 1 321 282 B1**
(45) Veröffentlichungstag und Bekanntmachung des Hinweises auf die Patenterteilung: **30.06.2004**
(21) Anmeldenummer: 02021996.0
(22) Anmeldetag: 01.10.2002
(51) Int. Cl.: B29C 70/50, B29C 70/16, D04H 3/04, B29B 15/12

(54) **Prepreg**
Prepreg
Prepreg

(30) Priorität: 20.12.2001 DE 10163145; 08.02.2002 DE 10205206
(43) Veröffentlichungstag der Anmeldung: 25.06.2003
(73) Patentinhaber: epo GmbH, 47877 Willich (DE)
(72) Erfinder: Kugler, Wolfgang, 6460 Karrösten 136 (AT); Grundmann, Ernst H., 41334 Nettetal (DE); Dothagen, Rolf, 52062 Aachen (DE)
(74) Vertreter: Gesthuysen, von Rohr & Eggert

(56) Entgegenhaltungen:
- DE-A- 3 536 272

## Beschreibung

Die vorliegende Erfindung betrifft ein Prepreg mit einem bahnförmigen Gelege aus Filamenten und mit einem Harz zur Imprägnierung, ein Verfahren zur Herstellung eines Bauteils gemäß dem Oberbegriff des Anspruchs 8 sowie ein Bauteil gemäß dem Oberbegriff des Anspruchs 10.

Unter der Bezeichnung "Prepreg" ist eine Fasermatte, insbesondere in Form eines Geleges, zu verstehen, die mit einem insbesondere wärmehärtbaren Harz imprägniert (durchtränkt) ist oder werden kann. Prepregs werden insbesondere durch Warmpressen weiterverarbeitet, u. a. zu Formteilen oder Halbzeug. Insbesondere können aus übereinander geschichteten Prepregs dickwandige Bauteile hergestellt werden.

Unter dem Begriff "Harze" sind hier insbesondere flüssige bis feste organische Produkte vorzugsweise gemäß DIN 55958 zu verstehen, die zur Verfestigung der Fasermatte aushärtbar bzw. vernetzbar sind. Generell kann es sich aber auch um ein sonstiges Bindemittel zur Verfestigung der damit imprägnierten Fasermatte beim Aushärten handeln.

Prepregs mit Fasermatten, unidirektionale Gelege, multiaxiale Gelege, Gewebe und dergl. werden insbesondere dann bei der Herstellung von Bauteilen eingesetzt, wenn es auf definierte mechanische Eigenschaften ankommt. Durch definierte Ausrichtung und gleichmäßige Belastung der Filamente können nämlich sehr hoch belastbare Bauteile erzielt werden.

Zur Herstellung eines Bauteils werden üblicherweise mehrere Prepregs übereinander gelegt, unter Vakuum zusammengepreßt und evakuiert sowie anschließend zur Verflüssigung und Aushärtung des Harzes erwärmt. Problematisch ist, wenn in den einzelnen Prepregs selbst oder zwischen benachbarten Prepregs Luft eingeschlossen wird und beim Evakuieren nicht entweichen kann. Dies führt zu einer unerwünschten, undefinierten Anordnung der Filamente. Insbesondere können hierdurch eine ungleichmäßige Belastung bzw. Spannung der Filamente und dadurch eine Verschlechterung der mechanischen Eigenschaften des fertigen Bauteils hervorgerufen werden.

Um Lufteinschlüsse zu vermeiden, ist es aus der Praxis bereits bekannt, abwechselnd trockene Gelege, Gewebe, Matten usw. - also Lagen ohne Harz - und mit Harz imprägnierte Prepregs oder Harzfilme übereinanderzuschichten, so daß beim Evakuieren Luft durch die trockenen Lagen seitlich entweichen kann.

Bei der vorgenannten Vorgehensweise ist nachteilig, daß der Aufwand verhältnismäßig hoch ist und insbesondere auf eine entsprechende Schichtung peinlich genau geachtet werden muß. Zudem hat sich gezeigt, daß dickere trockene Schichten bei der Verflüssigung und Aushärtung des Harzes oftmals nicht einwandfrei imprägniert bzw. durchtränkt werden. Dies führt beim fertigen Bauteil zu mangelhaften mechanischen Eigenschaften.

Die DE 35 36 272 A1, die den Ausgangspunkt der vorliegenden Erfindung bildet, offenbart ein Prepreg aus einer Harzschicht und einer sich anschließenden undurchtränkten, also trockenen Faserschichtung.

Weiter sind aus der Praxis bereits sandwichartige Prepregs bekannt. Beispielsweise wird zwischen einem trockenen oberen Gelege und einem trockenen unteren Gelege eine Harzschicht angeordnet.

Bei dem vorgenannten Aufbau ist nachteilig, daß eine aufwendige Herstellung des Prepregs erforderlich ist. Des weiteren erfolgt auch hier bei dickeren Gelegen, die insbesondere bei der Herstellung dickwandiger Bauteile erwünscht sind, oftmals eine nicht einwandfreie Imprägnierung bzw. Durchtränkung der einzelnen Filamente beim Verflüssigen und Aushärten des Harzes.

Der vorliegenden Erfindung liegt die Aufgabe zugrunde, ein Prepreg und ein Verfahren zur Herstellung eines Bauteils sowie ein aus Prepregs hergestelltes Bauteil anzugeben, so daß bei einfacher Herstellung des Prepregs eine einfache, kostengünstige Herstellung von insbesondere dickwandigen Bauteilen insbesondere unter Vermeidung unerwünschter Lufteinschlüsse ermöglicht wird.

Die obige Aufgabe wird durch ein Prepreg gemäß Anspruch 1, ein Verfahren gemäß Anspruch 8 oder ein Bauteil gemäß Anspruch 10 gelöst. Vorteilhafte Weiterbildungen sind Gegenstand der Unteransprüche.

Eine grundlegende Idee der vorliegenden Erfindung liegt darin, bei einem Prepreg mit einem Gelege letzteres nur teilweise in Dickenrichtung - in einem ersten Dickenbereich - mit Harz zu imprägnieren, so daß eine über die gesamte Flächenerstreckung des Prepregs reichende Schicht - in einem zweiten Dickenbereich des Geleges - gebildet wird, die nicht oder zumindest wesentlich geringer als der erste Dickenbereich mit Harz imprägniert (durchtränkt) ist. Die teilweise Imprägnierung führt also dazu, daß die trockenen oder nur geringfügig mit Harz in Kontakt stehenden Filamente des zweiten Dickenbereichs eine luftdurchlässige Schicht bilden, die ein seitliches Entweichen von Luft beim Evakuieren und/oder Zusammenpressen übereinanderliegender Prepregs ermöglicht.

Das vorschlagsgemäße Prepreg ist sehr einfach und kostengünstig herstellbar.

Ein weiterer Vorteil liegt darin, daß insbesondere dicke Wandungen von Bauteilen bedarfsweise ausschließlich aus den vorschlagsgemäßen Prepregs aufgebaut werden können.

Es können beispielsweise aber auch, gerade bei hohen Flächengewichten, Zwischenschichten von Prepregs, die mit hohem Harzgehalt durchimprägniert sind, eingesetzt werden.

Die nur teilweise Imprägnierung führt auf im Nachhinein erstaunlich einfache Weise zu einer gewünschten Doppelfunktion, nämlich einerseits zu einer weitgehenden Imprägnierung des Geleges bereits vor einer Endverarbeitung des Prepregs, wie es gerade bei dickeren Gelegen erforderlich ist, und andererseits zu einer sicheren Entlüftung, um unerwünschte Lufteinschlüsse beim Übereinanderschichten und anschließenden Zusammenpressen bzw. Evakuieren vermeiden zu können. Bisher wurde ein Prepreg bzw. eine Gelegeschicht immer zumindest im wesentlichen einheitlich imprägniert oder gar nicht imprägniert. Der vorliegenden Erfindung liegt jedoch die Idee zugrunde, den Harzanteil über die Dicke des Geleges gezielt zu variieren, um die gewünschten Eigenschaften zu erhalten.

Vorzugsweise ist der Harzgehalt des vorschlagsgemäßen Prepregs (Entlüftungsprepregs) derart hoch bzw. dosiert, daß bei der Verarbeitung das gesamte Gelege, also auch der zweite Dickenbereich des Geleges, imprägniert bzw. durchtränkt wird. Durch entsprechende Einstellung des Harzgehalts des vorschlagsgemäßen Prepregs kann also ein gewünschter Harzgehalt bzw. Faseranteil beim fertigen Bauteil erreicht werden. Insbesondere können bei der Herstellung eines insbesondere dickwandigen Bauteils ausschließlich vorschlagsgemäße, vorzugsweise relativ dicke Prepregs ohne Zwischenlage von sonstigen Harzfilmen bzw. -schichten, trockenen Lagen o.dgl. übereinander geschichtet werden.

Vorzugsweise schließt sich der zweite Dickenbereich unmittelbar an eine (äußere) Flachseite des Geleges an. Insbesondere sind dann gemäß einer besonders bevorzugten Ausgestaltung die äußeren "losen" Filamente auf der außenliegenden Flachseite des zweiten Dickenbereichs mittels eines ausschließlich auf der Flachseite angeordneten Fixierelements fixiert. Beispielsweise kann die Fixierung gemäß der DE 31 32 697 A1, EP 0 072 453 A2 oder DE 197 07 125 A1 ausgebildet sein. In besonders bevorzugter Ausgestaltung ist das Fixierelement durch ein verhältnismäßig großmaschiges, sehr dünnes Netz oder Gitter gebildet, das zumindest mit einigen der außenliegenden Filamente zumindest punktuell verbunden ist. Bedarfsweise kann ein Fixierelement bzw. eine Fixierung auch auf beiden Flachseiten des Geleges vorgesehen sein.

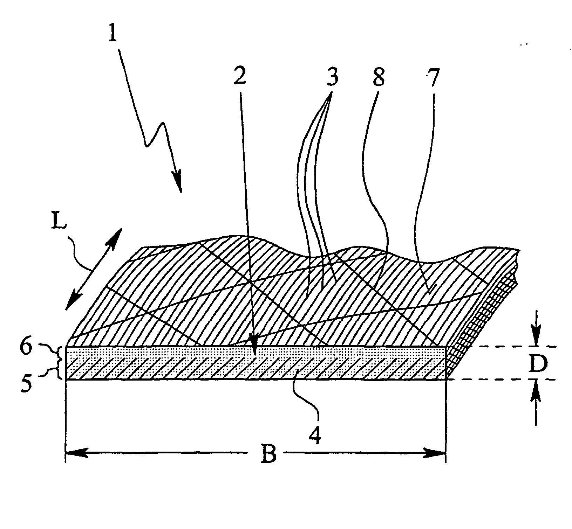

Weitere Vorteile, Eigenschaften, Merkmale und Aspekte der vorliegenden Erfindung ergeben sich aus der nachfolgenden Beschreibung eines bevorzugten Ausführungsbeispiels anhand der Zeichnung. Die einzige Figur zeigt
eine schematische Darstellung eines vorschlagsgemäßen Prepregs.

Das nur sehr schematisch, nicht maßstabsgerecht dargestellte Prepreg 1 weist ein Gelege 2 aus Filamenten 3 auf.

Das Gelege 2 ist hier unidirektional ausgebildet, d.h. alle Filamente 3 verlaufen parallel zueinander, hier in Längserstreckung L des Prepregs 1.

Bedarfsweise kann das Gelege 2 jedoch auch multidirektional bzw. multiaxial ausgebildet sein, also übereinanderliegende Schichten von Filamenten 3 mit unterschiedlichen Erstreckungsrichtungen aufweisen.

Die Gelegedicke D beträgt vorzugsweise mindestens 0,3 mm, insbesondere mindestens 0,5 mm. Beispielsweise beträgt die Gelegedicke sogar 1 mm oder mehr. Dies ist insbesondere bei der Herstellung von dickwandigen Bauteilen gewünscht bzw. vorteilhaft.

Anstelle eines insbesondere undirektionalen Geleges 2 können die Filamente 3 auch in Form eines Malimo-Geleges, Gewebes o.dgl. vorliegen.

Die Filamente 3 sind vorzugsweise aus Glasfasern, Kunststoffasern und/oder Carbonfasern gebildet. Insbesondere werden Filamente 3 aus Kohle (Carbonfasern), E-Glas, R-Glas oder Aramid eingesetzt.

Der Durchmesser der Filamente 3 beträgt vorzugsweise 2 bis 20 µm, insbesondere im wesentlichen 5 bis 12 µm.

Vorzugsweise liegen die Filamente 3 sehr dicht und gleichmäßig aneinander an, wobei die Filamente 3 vorzugsweise sehr gradlinig im Hinblick auf eine gleichmäßige Spannung bzw. Belastung bei Belastung eines aus dem Prepreg 1 gefertigten Bauteils (nicht dargestellt) verlaufen.

Die schräge Schraffur deutet ein Harz 4 an, mit dem das vorschlagsgemäße Prepreg 1 bzw. dessen Gelege 2 nur teilweise über die Gelegedicke D imprägniert (getränkt) ist. Der mit dem Harz 4 imprägnierte Teil bildet einen ersten Dickenbereich 5 des Geleges 2. An den ersten Dickenbereich 5 schließt sich ein zweiter Dickenbereich 6 des Geleges 2 an, der vorzugsweise nicht oder ggf. allenfalls gering mit dem Harz 4 oder einem sonstigen Harz oder Bindemittel imprägniert ist.

Bei dem Harz 4 handelt es sich insbesondere um einen Duroplast oder Thermoplast, vorzugsweise um ein Epoxidharz.

Das Flächengewicht des Geleges 2 ohne Harz 4 beträgt vorzugsweise 200 bis 5000 g/m², insbesondere 500 bis 2000 g/m², beispielsweise im wesentlichen 1000 g/m².

Ein wesentlicher Aspekt der vorliegenden Erfindung liegt darin, daß der zweite Dickenbereich 6 des Geleges 2 eine Schicht aus "trockenen" bzw. zumindest verhältnismäßig losen, nicht miteinander luftdicht verklebten Filamenten 3 bildet, die sich über die gesamte Breite B des Geleges 2 und entlang der Längserstreckung L des Prepregs 1, vorzugsweise über bzw. an einer Flachseite 7 des Geleges 2 erstreckt und in ausreichendem Maße luftdurchlässig ist, um beim Evakuieren und/oder Zusammenpressen von übereinander geschichteten Prepregs 1 ein seitliches Entweichen von zwischen den Prepregs 1 befindlicher Luft oder von Luft aus dem ersten Dickenbereich 5 des Geleges 2 zu ermöglichen.

Der zweite Dickenbereich 6 weist vorzugsweise mindestens eine Dicke von einem Filament 3, insbesondere mindestens 5 %, 10 % oder 20 % der gesamten Gelegedicke D auf. Die Dicke beträgt vorzugsweise höchstens 50 %, insbesondere höchstens 40 %, der Gelegedicke D.

Vorzugsweise ist das vorschlagsgemäße Prepreg 1 lediglich aus einem vorzugsweise "einstückigen" Gelege 2, das ggf. auch multidirektional ausgebildet sein kann, gebildet.

Das Gelege 2 besteht vorzugsweise seinerseits nur aus dem ersten Dickenbereich 5 und dem zweiten Dickenbereich 6, die insbesondere definiert - soweit dies möglich ist - ineinander übergehen.

Gemäß einer ganz besonders bevorzugten Ausführungsform wird das Gelege 2 lediglich ausgehend von einer Seite - beim Darstellungsbeispiel von der unteren Flachseite - mit dem Harz 4 bis zu einer vorgegebenen Tiefe bzw. Dicke imprägniert. Diese Tiefe bzw. Dicke bestimmt also den ersten Dickenbereich 5.

Bedarfsweise kann auf der sich unmittelbar an den ersten Dickenbereich 5 anschließenden äußeren Flachseite des Prepregs 1 - beim Darstellungsbeispiel der unteren Flachseite - eine Schicht aus reinem Harz 4 anschließen. Vorzugsweise ist das Harz 4 jedoch zumindest im wesentlichen vollständig im Gelege 2, also im ersten Dickenbereich 5, enthalten bzw. aufgenommen.

Der Anteil des Harzes 4 am Gelege 2 bzw. Prepreg 1 ist derart gewählt, daß nach der Verarbeitung zu einem Bauteil die gewünschten mechanischen Eigenschaften erreicht werden, insbesondere daß der zweite Dickenbereich 6 dann ausreichend imprägniert bzw. durchtränkt wird.

Insbesondere enthält das Prepreg (Entlüftungsprepreg) 1 bzw. Gelege 2 im wesentlichen 35 bis 60 Vol.%, vorzugsweise 40 bis 45 Vol.% an Harz 4 bezogen auf alle Filamente 3 des Geleges 2. Beim Verflüssigen des Harzes 4 während der Verarbeitung des Prepregs 1 verteilt sich dann das Harz 4 zumindest im wesentlichen gleichmäßig über die Dicke des Geleges 2, so daß der oftmals gewünschte, ideale Fasergehalt von 55 bis 60 Vol.% erreichbar ist.

Bei der Verarbeitung bzw. bei der Herstellung eines Bauteils werden die vorschlagsgemäßen Prepregs 1 vorzugsweise unmittelbar, also ohne Zwischenlage von sonstigen Schichten, Folien, Matten o.dgl. übereinander geschichtet, und zwar derart, daß beim Übergang von einem Prepreg 1 zum nächsten jeweils ein erster Dickenbereich 5 und ein zweiter Dickenbereich 6 aufeinander zuliegen kommen. Dies stellt sicher, daß beim anschließenden Evakuieren und/oder Zusammenpressen des Prepregstapels Luft zwischen den Flachseiten benachbarter Prepregs 1 durch den jeweiligen zweiten Dickenbereich 6 seitlich - also quer zur Längserstreckung L - entweichen kann. Entsprechendes gilt für das Entweichen von Luft aus dem ersten Dickenbereich 5 beim Evakuieren und/oder Zusammenpressen des Prepregstapels. Der zweite Dickenbereich 6 verhindert also ungewollte Lufteinschlüsse im Prepregstapel, so daß die durch Lufteinschlüsse verursachten, eingangs bereits erläuterten Folgen für das fertige Bauteil vermieden werden können.

Anschließend erfolgt insbesondere durch Erwärmen, beispielsweise auf etwa 60°C bis 180°C, insbesondere 60°C bis 100°C, ein Verflüssigen und Aushärten bzw. Vernetzen des vorzugsweise wärmehärtbaren Harzes 4.

Der vorschlagsgemäße Aufbau des Prepregs 1 ermöglicht selbst bei einem sehr dicken Gelege 2, daß der zweite Dickenbereich 6 ausreichend mit dem verflüssigten Harz 4 vor dessen Aushärten imprägniert bzw. durchtränkt wird, da die Dicke des zweiten Dickenbereichs 6 im Verhältnis zur Gesamtdicke D des Geleges 2 verhältnismäßig klein gewählt und bedarfsgerecht - beispielsweise in Abhängigkeit vom verwendeten Harz 4, vom Filamentmaterial, vom Filamentdurchmesser u.dgl. - angepaßt werden kann.

Zur Herstellung bzw. Zwischenlagerung oder zum Transport kann das vorschlagsgemäße Prepreg 1 mit einem nicht dargestellten Träger, beispielsweise Silikonpapier, insbesondere auf der Imprägnierseite - beim Darstellungsbeispiel also auf der unteren Flachseite - versehen sein.

Vorzugsweise weist das vorschlagsgemäße Prepreg 1 auf seiner Flachseite 7, an die sich der zweite Dickenbereich 6 des Geleges 2 anschließt, bzw. auf der Außenseite des zweiten Dickenbereichs 6 ein Fixierelement 8 auf.

Das Fixierelement 8 ist vorzugsweise ausschließlich auf der Flachseite 7 angeordnet, um den Verlauf der Filamente 3 im Gelege 2 nicht zu stören. Das Fixierelement 8 ist beim Darstellungsbeispiel durch ein vorzugsweise grobmaschiges Netz oder Gitter gebildet, das zur Stabilisierung des Geleges 2, insbesondere des zweiten Dickenbereichs 6 des Geleges 2, zumindest mit einigen der außenliegenden Filamente 3 auf der Flachseite 7 zumindest punktuell verbunden, beispielsweise verklebt ist.

Wesentlich ist, daß beim vorschlagsgemäßen Prepreg 1 keine Elemente, wie Steppnähte o.dgl. das Gelege 2 durchgreifen oder einschnüren, so daß eine optimale Ausrichtung und ein optimaler Verlauf der Filamente 3 in dem zu fertigenden Bauteil ohne weiteres erreichbar ist.

## Patentansprüche

1. Prepreg (1) mit einem bahnförmigen Gelege (2) aus Filamenten (3) und mit einem Harz (4) zur Imprägnierung, wobei das Gelege (2) über die Gelegedicke (D) in einem ersten Dickenbereich (5) imprägniert ist, so daß das Harz (4) in dem Gelege (2) aus Filamenten (3) im ersten Dickenbereich (5) aufgenommen ist, und das Gelege (2) in einem zweiten Dickenbereich (6) nicht oder wesentlich geringer imprägniert ist und wobei sich der erste und zweite Dickenbereich (5, 6) jeweils über die gesamte Gelegebreite (B) erstrecken, so daß die Filamente (3) im zweiten Dickenbereich (6) quer zur Längserstreckung (L) des Prepregs (1) luftdurchlässig sind.

2. Prepreg nach Anspruch 1, **dadurch gekennzeichnet, daß** sich der zweite Dikkenbereich (6) an eine Flachseite (7) des Geleges (2) anschließt, insbesondere wobei das Prepreg (I) ein ausschließlich auf der Flachseite (7) angeordnetes, vorzugsweise netzartig ausgebildetes Fixierelement (8) aufweist, das die an der Flachseite (7) angeordneten Filamente (3) des zweiten Dickenbereichs (6) zumindest teilweise und/oder punktuell fixiert, vorzugsweise wobei das Fixierelement (8) ein Flächengewicht von 0,5 bis 4 g/m², insbesondere von 1 bis 1,5 g/m², aufweist.

3. Prepreg nach einem der voranstehenden Ansprüche, **dadurch gekennzeichnet, daß** die Filamente (3) des Geleges (2) ungestört verlaufen, insbesondere keine sich durch das Gelege (2) erstreckende Elemente vorgesehen sind, und/oder daß die Filamente (3) unidirektional oder multidirektional verlaufen, und/oder daß die Filamente (3) einen Durchmesser von 2 bis 20 µm, insbesondere im wesentlichen 5 bis 12 µm, aufweisen, und/oder daß die Filamente (3) aus Glasfasern, Kunststoffasern und/oder Carbonfasern gebildet sind.

4. Prepreg nach einem der voranstehenden Ansprüche, **dadurch gekennzeichnet, daß** das Prepreg (1) nur ein einziges Gelege (2) aufweist, und/oder daß das Prepreg (1) 35 bis 60 Vol.%, insbesondere 40 bis 45 Vol.%, Harz (4) bezogen auf alle Filamente (3) des Geleges (2) enthält.

5. Prepreg nach einem der voranstehenden Ansprüche, **dadurch gekennzeichnet, daß** der zweite Dickenbereich (6) mindestens eine Dicke von einem Filament (3) aufweist, und/oder daß der zweite Dickenbereich (6) bezogen auf die gesamte Gelegedicke (D) eine Dicke von 5 % bis 50 %, insbesondere von 10 % bis 40 %, aufweist, und/oder daß sich an den zweiten Dickenbereich (6) der erste Dickenbereich (5) unmittelbar anschließt, insbesondere wobei das Gelege (2) nur aus dem ersten und zweiten Dickenbereich (5, 6) gebildet ist.

6. Prepreg nach einem der voranstehenden Ansprüche, **dadurch gekennzeichnet, daß** die Gelegedicke (D) mindestens 0,3 mm, vorzugsweise mindestens 0,5 mm, und insbesondere im wesentlichen 1 mm oder mehr beträgt, und/oder daß das Gelege (2) ohne Harz (4) ein Flächengewicht von 200 bis 5000 g/m², insbesondere von 500 bis 2000 g/m², aufweist, und/oder daß das Gelege (2) einseitig mit dem Harz (4) imprägniert ist.

7. Prepreg nach einem der voranstehenden Ansprüche, **dadurch gekennzeichnet, daß** das Harz (4) zumindest im wesentlichen ausschließlich im Gelege (2), insbesondere im ersten Dickenbereich (5), angeordnet ist, und/oder daß das Harz (4) thermisch aushärtbar ist und/oder ein Duroplast und/oder ein thermisch vernetzbarer Thermoplast ist.

8. Verfahren zur Herstellung eines Bauteils aus Prepregs (1),
**dadurch gekennzeichnet,**
**daß** mehrere Prepregs (1) gemäß einem der Ansprüche 1 bis 7 übereinander geschichtet werden,
**daß** die übereinander geschichteten Prepregs (1) evakuiert und/oder zusammengedrückt werden, wobei zwischen Prepregs (1) eingeschlossene Luft durch den zweiten Dickenbereich (6) entweicht, und
**daß** anschließend im evakuierten und/oder zusammengedrückten Zustand das Harz (4) zur Vergleichmäßigung der Imprägnierung über die Dickenbereiche (5, 6) verflüssigt und schließlich ausgehärtet bzw. vernetzt wird.

9. Verfahren nach Anspruch 8, **dadurch gekennzeichnet, daß** nur Prepregs (1) gemäß einem der Ansprüche 1 bis 7 verwendet werden, und/oder daß das Harz (4) durch Erwärmen verflüssigt und/oder ausgehärtet wird, und/oder daß die Prepregs (1) derart übereinander geschichtet werden, daß beim Übergang von einem Prepreg (1) zum nächsten jeweils ein erster Dickenbereich (5) und ein zweiter Dickenbereich (6) aufeinander liegen oder daß zwischen den zweiten einander zugewandten Dickenbereichen (6) von zwei Prepregs (1) ein durchimprägniertes Prepreg liegt.

10. Bauteil, hergestellt aus Prepregs (1),
**dadurch gekennzeichnet,**
**daß** die Prepregs (1) gemäß einem der Ansprüche 1 bis 7 ausgebildet sind und/oder daß das Bauteil gemäß Anspruch 8 oder 9 hergestellt ist.

## Claims

1. A prepreg (1) having a web-form sheet (2) composed of filaments (3) and having a resin (4) for impregnation, wherein the sheet (2) is impregnated across its thickness (D) in a first thickness region (5), so that the resin (4) in the sheet (2) composed of filaments (3) is absorbed in the first thickness region (5), and the sheet (2) is not or substantially less impregnated in a second thickness region (6) and wherein the first and second thickness regions (5, 6) each extend across the entire sheet breadth (B), so that the filaments (3) in the second thickness region (6) are air pervious at right angles to the longitudinal (L) of the prepreg (1).

2. A prepreg according to claim 1, **characterized in that** the second thickness region (6) adjoins a flat side (7) of the sheet (2), especially wherein the prepreg (1) comprises a fixing element (8) which is disposed exclusively on the flat side (7) and preferably has a netlike construction, said fixing element (8) being at least partially and/or spot fixed to the filaments (3) of the second thickness region (6) which are disposed at the flat side (7), preferably wherein the fixing element (8) has a basis weight from 0.5 to 4 g/m² and especially from 1 to 1.5 g/m².

3. A prepreg according to either one of the preceding claims, **characterized in that** the filaments (3) of the sheet (2) extend undisrupted, in particular there are no elements which extend through the sheet (2), and/or **in that** the filaments (3) extend unidirectionally or multidirectionally, and/or **in that** the filaments (3) are from 2 to 20 µm and in particular essentially from 5 to 12 µm in diameter, and/or **in that** the filaments (3) are formed from glass fibres, polymeric fibres and/or carbon fibres.

4. A prepreg according to any one of the preceding claims, **characterized in that** the prepreg (1) comprises just a single sheet (2), and/or **in that** the prepreg (1) contains from 35% to 60% by volume and especially from 40% to 45% by volume of resin (4) based on all filaments (3) of the sheet (2).

5. A prepreg according to any one of the preceding claims, **characterized in that** the second thickness region (6) has at least a thickness of one filament (3) and/or **in that** the second thickness region (6) has a thickness from 5% to 50% and especially from 10% to 40% based on the entire sheet thickness (D), and/or **in that** the second thickness region (6) is directly adjoined by the first thickness region (5), in particular wherein the sheet (2) is formed just from the first and second thickness regions (5, 6).

6. A prepreg according to any one of the preceding claims, **characterized in that** the sheet thickness (D) is at least 0.3 mm, preferably at least 0.5 mm and especially essentially 1 mm or more, and/or **in that** the sheet (2) without resin (4) has a basis weight from 200 to 5000 g/m² and especially from 500 to 2000 g/m², and/or **in that** the sheet (2) is onesidedly impregnated with the resin (4).

7. A prepreg according to any one of the preceding claims, **characterized in that** the resin (4) is disposed at least essentially exclusively in the sheet (2), especially in the first thickness region (5), and/or **in that** the resin (4) is thermally curable and/or a thermoset and/or a thermally crosslinkable thermoplastic.

8. A process for producing a structural component from prepregs (1), **characterized**
**in that** plural prepregs (1) as per any one of claims 1 to 7 are superposed,
**in that** the superposed prepregs (1) are evacuated and/or compressed, air enclosed between prepregs (1) escaping through the second thickness region (6), and
**in that** subsequently, in the evacuated and/or compressed state, the resin (4) is liquefied to uniformize the impregnation across the thickness regions (5, 6) and finally cured or crosslinked.

9. A process according to claim 8, **characterized in that** only prepregs (1) as per any one of claims 1 to 7 are used, and/or **in that** the resin (4) is liquefied and/or cured by heating, and/or **in that** the prepregs (1) are superposed such that a first thickness region (5) and a second thickness region (6) come to lie on top of each other on passing from one prepreg (1) to the next or that there is a through-impregnated prepreg disposed between two mutually facing thickness regions (6) of two prepregs (1).

10. A structural component produced from prepregs (1), **characterized in that** the prepregs (1) are constructed as per any one of claims 1 to 7 and/or **in that** the structural component is produced as per claim 8 or 9.

## Revendications

1. Préimprégné (1) comprenant un non-tissé (2) en forme de bande constitué par des filaments (3) et comprenant une résine (4) pour l'imprégnation, le non-tissé (2) étant imprégné sur l'épaisseur (D) du non-tissé dans une première zone d'épaisseur (5) de telle sorte que la résine (4) est absorbée dans le non-tissé (2) constitué par des filaments (3) dans une première zone d'épaisseur, et le non-tissé (2), dans une deuxième zone d'épaisseur (6), n'est pas imprégné ou est imprégné de manière essentiellement inférieure, les première et deuxième zones d'épaisseur (5, 6) s'étendant respectivement sur toute la largeur (B) du non-tissé, de telle sorte que les filaments (3) sont perméables à l'air dans la deuxième zone d'épaisseur (6) en direction transversale par rapport à l'étendue (L) du préimprégné (1) en longueur.

2. Préimprégné selon la revendication 1, **caractérisé en ce que** la deuxième zone d'épaisseur (6) vient se raccorder à un côté plat (7) du non-tissé (2), en particulier dans lequel le préimprégné (1) présente un élément de fixation (8), de préférence réticulé, disposé exclusivement sur le côté plat (7) qui fixe au moins en partie et/ou de manière ponctuelle les filaments (3) de la deuxième zone d'épaisseur (6), disposés contre le côté plat (7), de préférence dans lequel l'élément de fixation (8) présente un poids surfacique de 0,5 à 4 g/m², en particulier de 1 à 1,5 g/m².

3. Préimprégné selon l'une quelconque des revendications précédentes, **caractérisé en ce que** les filaments (3) du non-tissé (2) s'étendent sans entrave, en particulier **en ce qu'**on ne prévoit aucun élément s'étendant à travers le non-tissé (2), et/ou **en ce que** les filaments (3) s'étendent dans une seule direction ou dans des directions multiples, et/ou **en ce que** les filaments (3) présentent un diamètre de 2 à 20 µm, en particulier essentiellement de 5 à 12 µm, et/ou **en ce que** les filaments (3) sont formés à partir de fibres de verre, de fibres synthétiques et/ou de fibres de carbone.

4. Préimprégné selon l'une quelconque des revendications précédentes, **caractérisé en ce que** le préimprégné (1) présente un seul non-tissé (2) et/ou **en ce que** le préimprégné (1) contient de la résine (4) à concurrence de 35 à 60 % en volume, en particulier de 40 à 45 % en volume, rapportés à tous les filaments (3) du non-tissé (2).

5. Préimprégné selon l'une quelconque des revendications précédentes, **caractérisé en ce que** la deuxième zone d'épaisseur (6) présente au moins une épaisseur d'un filament (3), et/ou **en ce que** la deuxième zone d'épaisseur (6), rapportée à l'épaisseur totale (D) du non-tissé présente une épaisseur de 5 % à 50 %, en particulier de 10 % à 40 %, et/ou **en ce que** la première zone d'épaisseur (5) vient se raccorder directement à la deuxième zone d'épaisseur (6), en particulier dans lequel le non-tissé (2) est formé uniquement par la première et par la deuxième zone d'épaisseur (5, 6).

6. Préimprégné selon l'une quelconque des revendications précédentes, **caractérisé en ce que** l'épaisseur (D) s'élève à au moins 0,3 mm, de préférence à au moins 0,5 mm et en particulier essentiellement à 1 mm ou plus, et/ou **en ce que** le non-tissé (2), en l'absence de résine (4), présente un poids surfacique de 200 à 5000 g/m², en particulier de 500 à 2000 g/m², et/ou **en ce que** le non-tissé (2) est imprégné sur une seule face avec la résine (4).

7. Préimprégné selon l'une quelconque des revendications précédentes, **caractérisé en ce que** la résine (4) est disposée à titre exclusif, au moins de manière essentielle, dans le non-tissé (2), en particulier dans la première zone d'épaisseur (5), et/ou **en ce que** la résine (4) est une résine thermodurcissable et/ou un duroplaste et/ou un thermoplaste réticulable par voie thermique.

8. Procédé pour la fabrication d'un élément de construction constitué par des préimprégnés (1) **caractérisé en ce que** plusieurs préimprégnés (1) selon l'une quelconque des revendications 1 à 7 sont superposés l'un à l'autre ; les préimprégnés (1) superposés l'un à l'autre sont soumis à un traitement pour faire le vide et/ou sont soumis à une compression, l'air inclus entre les préimprégnés (1) s'échappant à travers la deuxième zone d'épaisseur (6) ; et par la suite, à l'état dans lequel règne le vide et/ou à l'état comprimé, la résine (4), afin d'uniformiser l'imprégnation sur les zones d'épaisseur (5, 6), est liquéfiée et finalement durcie, respectivement réticulée.

9. Procédé selon la revendication 8, **caractérisé en ce qu'**on n'utilise que des préimprégnés selon l'une quelconque des revendications 1 à 7, et/ou **en ce qu'**on liquéfie et/ou durcit la résine (4) par réchauffement, et/ou **en ce qu'**on superpose les préimprégnés les uns par-dessus les autres de telle sorte qu'à l'endroit de passage d'un préimprégné (1) au suivant, respectivement une première zone d'épaisseur (5) et une deuxième zone d'épaisseur (6) viennent se disposer l'une sur l'autre ou bien **en ce que**, entre les deuxièmes zones d'épaisseur (6) tournées l'une vers l'autre, de deux. préimprégnés (1), vient se disposer un préimprégné qui a été complètement imprégné.

10. Élément de construction fabriqué à partir de préimprégnés (1) **caractérisé en ce que** les préimprégnés (1) ont été réalisés conformément à l'une quelconque des revendications 1 à 7 et/ou **en ce que** l'élément de construction est fabriqué conformément à la revendication 8 ou 9.
